(19) Europäisches Patentamt
European Patent Office
Office européen des brevets

(11) **EP 2 428 752 A2**

## (12) EUROPEAN PATENT APPLICATION

(43) Date of publication:
**14.03.2012 Bulletin 2012/11**

(51) Int Cl.:
***F25B 13/00*** *(2006.01)*   ***F25B 31/00*** *(2006.01)*
***F25B 47/02*** *(2006.01)*   ***F25B 49/02*** *(2006.01)*

(21) Application number: **11155869.8**

(22) Date of filing: **24.02.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.09.2010 JP 2010202006**

(71) Applicant: **Panasonic Corporation**
**Kadoma-shi**
**Osaka 571-8501 (JP)**

(72) Inventors:
 • **Fujita, Naoto**
 **Osaka-shi**
 **Osaka 540-6207 (JP)**

 • **Yumiba, Daisuke**
 **Osaka-shi**
 **Osaka 540-6207 (JP)**
 • **Kamoda, Hirokazu**
 **Osaka-shi**
 **Osaka 540-6207 (JP)**
 • **Daimon, Hiroyuki**
 **Osaka-shi**
 **Osaka 540-6207 (JP)**
 • **Yamamoto, Noriaki**
 **Osaka-shi**
 **Osaka 540-6207 (JP)**

(74) Representative: **Eisenführ, Speiser & Partner**
**Postfach 31 02 60**
**80102 München (DE)**

## (54) Air conditioner

(57)    An air conditioner is provided with a heat storage tank 32 that accommodates a heat storage material 36 for storing therein heat generated by a compressor 6 and a heat storage heat exchanger 34. A heat storage bypass circuit is provided to connect a refrigerant pipe between an indoor heat exchanger 16 and an expansion valve 12 and a refrigerant pipe between a four-way valve 8 and an inlet port defined in the compressor 6, and a defrosting bypass circuit is provided to connect a refrigerant pipe between the expansion valve 12 and an outdoor heat exchanger 14 and a refrigerant pipe between an outlet port defined in the compressor 6 and the four-way valve 8. The heat storage heat exchanger 34 and a heat storage two-way valve 42 are provided in the heat storage bypass circuit, and a defrosting two-way valve 30 is provided in the defrosting bypass circuit. If a temperature detected by a compressor temperature sensor 58, a compressor discharge temperature sensor 60, or a heat storage tank temperature sensor 50 exceeds a first predetermined temperature, the heat storage two-way valve 42 is opened to introduce a refrigerant, which has passed through the indoor heat exchanger 16 or the outdoor heat exchanger 14, into the heat storage heat exchanger 34.

Fig.1

**Description**

BACKGROUND OF THE INVENTION

1. Field of the Invention

The present invention relates to an air conditioner having a heat storage tank for accommodating a heat storage material that stores heat generated by a compressor, and also having a heat storage heat exchanger for heat exchanging with use of heat stored in the heat storage material.

2. Description of the Related Art

A conventional heat pump air conditioner conducts defrosting during heating by switching a four-way valve from a heating cycle to a cooling cycle when frost has been formed on an outdoor heat exchanger. In this defrosting method, an indoor fan is not in operation during defrosting, but cold air flows gradually out of an indoor unit, thus posing a problem of warmth being lost.

In view of this, another air conditioner has been proposed having a heat storage device mounted on a compressor in an outdoor unit for the purpose of defrosting by making use of waste heat of the compressor that has been stored in a heat storage tank during heating (see, for example, Japanese Laid-Open Patent Publication No. 3-31666).

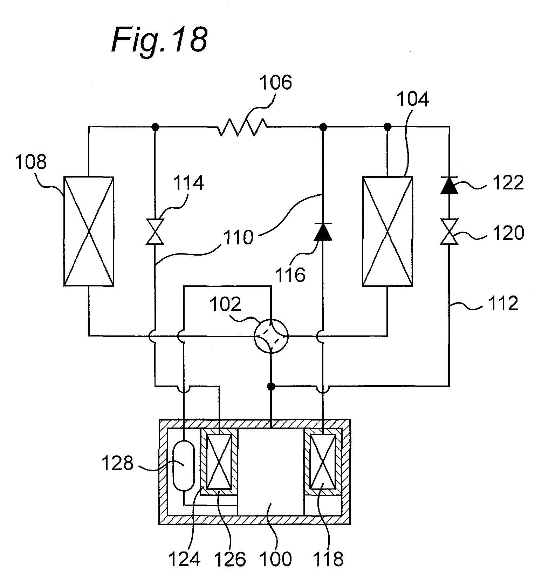

Fig. 18 depicts an example of a refrigerating cycle employing such a defrosting method. This refrigerating cycle includes an outdoor unit, in which a compressor 100, a four-way valve 102, an outdoor heat exchanger 104, and a capillary tube 106 are provided, and an indoor unit in which an indoor heat exchanger 108 is provided. All of the compressor 100, the four-way valve 102, the outdoor heat exchanger 104, the capillary tube 106, and the indoor heat exchanger 108 are connected via refrigerant piping. The refrigerating cycle also includes a first bypass circuit 110 for bypassing the capillary tube 106 and a second bypass circuit 112 having one end connected to a pipe extending from a discharge side of the compressor 100 to the indoor heat exchanger 108 via the four-way valve 102 and the other end connected to another pipe extending from the capillary tube 106 to the outdoor heat exchanger 104. The first bypass circuit 110 includes a two-way valve 114, a check valve 116, and a heat storage heat exchanger 118, while the second bypass circuit 112 includes a two-way valve 120 and a check valve 122.

Further, a heat storage tank 124 is provided around the compressor 100, and a heat storage material 126 for heat exchanging with the heat storage heat exchanger 118 is filled in the heat storage tank 124.

In this refrigerating cycle, the two two-way valves 114, 120 are opened during defrosting to allow part of a refrigerant discharged from the compressor 100 to flow into the second bypass circuit 112 and the remaining refrigerant to flow into the indoor heat exchanger 108 via the four-way valve 102. The refrigerant that passes through the indoor heat exchanger 108 is used for heating, and a slight amount of the refrigerant then flows into the outdoor heat exchanger 104 via the capillary tube 106, while the remaining majority of the refrigerant flows into the first bypass circuit 110 and into the heat storage heat exchanger 118 via the two-way valve 114 to take heat from the heat storage material 126, and then passes through the check valve 116 to join the refrigerant that has passed through the capillary tube 106 before the refrigerant flows into the outdoor heat exchanger 104. Thereafter, the refrigerant flowing toward the outdoor heat exchanger 104 joins the refrigerant that has passed through the second bypass circuit 112 at an inlet of the outdoor heat exchanger 104 to conduct defrosting by making use of heat contained in the refrigerant. After the defrosting, the refrigerant passes through the four-way valve 102 and then enters the compressor 100.

In this refrigerating cycle, the second bypass circuit 112 acts to introduce a hot gas discharged from the compressor 100 during defrosting to the outdoor heat exchanger 104 and maintain high the pressure of the refrigerant flowing into the outdoor heat exchanger 104, thus making it possible to enhance the defrosting capability and complete the defrosting within a considerably short period of time.

SUMMARY OF THE INVENTION

In the refrigerating cycle as disclosed in Japanese Laid-Open Patent Publication No. 3-31666, during normal heating or cooling with no defrosting operation conducted, the two two-way valves 114, 120 are closed, and heat is stored in the heat storage material 126 by the operation of the compressor 100, thus resulting in an increase in temperature of the heat storage material 126.

However, if the temperature of the heat storage material 126 increases excessively, it is likely that the heat storage material 36 may be deteriorated due to transformation (for example, oxidation) or boiling thereof.

The present invention has been developed to overcome the above-described disadvantages.

It is accordingly an objective of the present invention to provide an air conditioner capable of avoiding deterioration or evaporation of the heat storage material that stores therein heat generated by the compressor.

In accomplishing the above and other objectives, the air conditioner according to the present invention has a refrigerating cycle in which a refrigerant flows through a compressor, a four-way valve, an indoor heat exchanger, an expansion valve, an outdoor heat exchanger, and the four-way valve in this order during heating, and also has a heat storage tank that accommodates a heat storage material for storing therein heat generated by the compressor and a heat storage heat exchanger. The air conditioner further includes a heat storage bypass circuit for connecting a refrigerant pipe between the indoor heat exchanger and the expansion valve and a refrigerant pipe between the four-way valve and an inlet port defined in the compressor, and a defrosting bypass circuit for connecting a refrigerant pipe between the expansion valve and the outdoor heat exchanger and a refrigerant pipe between an outlet port defined in the compressor and the four-way valve. The heat storage heat exchanger and a heat storage two-way valve are provided in the heat storage bypass circuit, and a defrosting two-way valve is provided in the defrosting bypass circuit. Also, at least one of a compressor temperature sensor for detecting a temperature of the compressor, a compressor discharge temperature sensor for detecting a temperature of a refrigerant discharged from the compressor, and a heat storage tank temperature sensor for detecting a temperature of the heat storage tank is provided. If the temperature detected by the compressor temperature sensor, the compressor discharge temperature sensor, or the heat storage tank temperature sensor exceeds a first predetermined temperature, the heat storage two-way valve is opened to introduce the refrigerant into the heat storage heat exchanger.

Because the refrigerant introduced into the heat storage heat exchanger has passed through the indoor heat exchanger during heating or through the outdoor heat exchanger during cooling, and accordingly has a reduced temperature, the refrigerant acts to reduce the temperature of the heat storage material. This is effective to avoid an excessive temperature rise of the heat storage material. In particular, the heat storage material is positioned around the compressor and, hence, local boiling at a location where the heat storage material is held in contact with the compressor is avoided, thereby minimizing deterioration or evaporation of the heat storage material.

An operation frequency of the compressor may be reduced instead of opening the heat storage two-way valve.

If the temperature detected by the compressor temperature sensor, the compressor discharge temperature sensor, or the heat storage tank temperature sensor exceeds the first predetermined temperature, an operation frequency of the compressor is reduced when the heat storage two-way valve is opened.

Parallel use of the control for opening the heat storage two-way valve and the control for reducing the operation frequency of the compressor can further enhance the effect of avoiding the excessive temperature rise of the heat storage material.

Alternatively, if the temperature detected by the compressor discharge temperature sensor exceeds the first predetermined temperature, the opening of the expansion valve may be increased instead of opening the heat storage two-way valve.

When the compressor is not in operation for a long time, a temperature rise of the compressor is slow, and it is accordingly likely that the temperature of the compressor and that of the heat storage material may greatly differ. In view of this, a protection control for the heat storage material is conducted upon detection of the discharged refrigerant temperature having a good follow-up capability, thereby making it possible to effectively reduce the temperature of the heat storage material even after the compressor has not been in operation for a long time.

If the temperature detected by the compressor discharge temperature sensor exceeds a second predetermined temperature greater than the first predetermined temperature, the heat storage two-way valve is opened to thereby positively reduce the temperature of the heat storage material even after the compressor has not been in operation for a long time.

Advantageously, an opening and closing control of the heat storage two-way valve is conducted to periodically open and close the heat storage two-way valve. There is a time delay between the opening control of the heat storage valve and the temperature reduction of the heat storage material, but the opening and closing control of the heat storage two-way valve can gradually reduce the temperature of the heat storage material while confirming the temperature reduction of the heat storage material.

In the opening and closing control of the heat storage two-way valve, a period of time of an open state is set shorter than that of a closed state, thus making it possible to avoid deterioration or evaporation of the heat storage material without losing comfort of a person in a room.

The period of time of the open state and that of the closed state during heating are respectively set shorter than the period of time of the open state and that of the closed state during cooling. The density of a liquid refrigerant having passed through the indoor heat exchanger during heating differs from that of a two-phase (gaseous phase and liquid phase) refrigerant having passed through the outdoor heat exchanger during cooling and, hence, deterioration or evaporation of the heat storage material can be effectively avoided by setting the period of time of the open state and that of the closed state of the heat storage two-way valve in the above-described manner.

BRIEF DESCRIPTION OF THE DRAWINGS

The above and other objectives and features of the present invention will become more apparent from the following description of a preferred embodiment thereof with reference to the accompanying drawings, throughout which like parts are designated by like reference numerals, and wherein:

Fig. 1 is a piping diagram of an air conditioner according to the present invention having a heat storage device;
Fig. 2 is a diagram similar to Fig. 1, but depicting an operation of the air conditioner of Fig. 1 and a flow of refrigerant during normal heating;
Fig. 3 is a diagram similar to Fig. 1, but depicting an operation of the air conditioner of Fig. 1 and a flow of refrigerant during defrosting/heating;
Fig. 4 is a graph indicating a defrosting initiation temperature and a heat storage material temperature rise-initiation temperature set based on an outdoor air temperature;
Fig. 5 is a flowchart indicating a defrosting/heating control;
Fig. 6 is a graph indicating a change of a refrigerant temperature at an outlet of an outdoor heat exchanger after initiation of a defrosting operation;
Fig. 7 is a flowchart indicating a control after the air conditioner has been returned to a heating operation from the defrosting operation;
Fig. 8 is a diagram similar to Fig. 1, but particularly depicting positions where various temperature sensors are fitted;
Fig. 9 is a schematic diagram indicating a protection control for the heat storage material based on a compressor temperature;
Fig. 10 is a timing chart indicating an opening and closing control for a heat storage two-way valve;
Fig. 11 is a schematic diagram indicating a protection control for the heat storage material based on a refrigerant discharge temperature;
Fig. 12 is a schematic diagram indicating another protection control for the heat storage material based on the refrigerant discharge temperature;
Fig. 13 is a graph indicating a relationship among an actual temperature of the heat storage material, a temperature detected by a heat storage tank temperature sensor, and a temperature obtained by correcting the detected temperature, when the outdoor air temperature is 2°C;
Fig. 14 is a graph indicating a relationship among the actual temperature of the heat storage material, the temperature detected by the heat storage tank temperature sensor, and the temperature obtained by correcting the detected temperature, when the outdoor air temperature is -7°C;
Fig. 15 is a graph indicating a relationship among the actual temperature of the heat storage material, the temperature detected by the heat storage tank temperature sensor, and the temperature obtained by correcting the detected temperature, when the outdoor air temperature is -20°C;
Fig. 16 is a graph indicating a relationship among the actual temperature of the heat storage material, the temperature detected by the heat storage tank temperature sensor, and the temperature obtained by correcting the detected temperature, when the outdoor air temperature is 35°C;
Fig. 17 is a graph indicating a temperature change of the heat storage material after the defrosting operation when the heat storage tank is filled with a sufficient amount of heat storage material and with an insufficient amount of heat storage material; and
Fig. 18 is a schematic piping diagram of a conventional refrigerating cycle.

DETAILED DESCRIPTION OF THE EMBODIMENTS

Embodiments of the present invention are explained hereinafter with reference to the drawings.

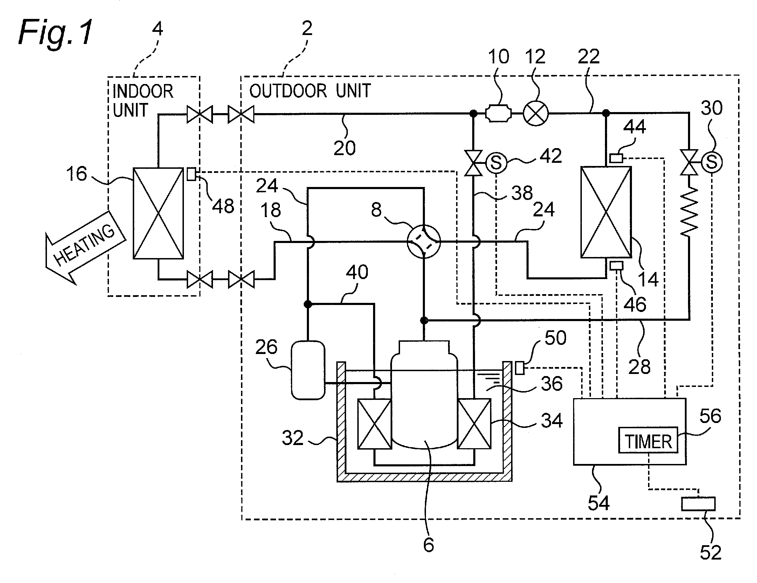

Fig. 1 depicts a piping diagram of an air conditioner embodying a refrigerating cycle according to the present invention. As shown therein, the air conditioner includes an outdoor unit 2 and an indoor unit 4 connected to each other via refrigerant piping.
The outdoor unit 2 accommodates a compressor 6, a four-way valve 8, a strainer 10, an expansion valve 12, and an outdoor heat exchanger 14, while the indoor unit 4 accommodates an indoor heat exchanger 16. Such constituent elements are connected via refrigerant piping to define a refrigerating cycle.
More specifically, the compressor 6 and the indoor heat exchanger 16 are connected to each other via a refrigerant pipe 18 on which the four-way valve 8 is mounted, and the indoor heat exchanger 16 and the expansion valve 12 are connected to each other via a refrigerant pipe 20 on which the strainer 10 is mounted. The expansion valve 12 and the outdoor heat exchanger 14 are connected to each other via a refrigerant pipe 22, and the outdoor heat exchanger 14 and the compressor 6 are connected to each other via a refrigerant pipe 24.
The four-way valve 8 is located midway on the refrigerant pipe 24, and an accumulator 26 for separating a liquid refrigerant and a gaseous refrigerant is provided on the refrigerant pipe 24 on a refrigerant suction side of the compressor 6. The compressor 6 and the refrigerant pipe 22 are connected to each other via a refrigerant pipe 28, on which a defrosting two-way valve (for example, a solenoid valve) 30 is provided.

A heat storage tank 32 accommodating a heat storage heat exchanger 34 therein is provided around the compressor 6 and filled with a heat storage material (for example, ethylene glycol aqueous solution) 36 for heat exchanging with the heat storage heat exchanger 34. The heat storage tank 32 and the heat storage heat exchanger 34 constitute a heat storage device.

The refrigerant pipe 20 and the heat storage heat exchanger 34 are connected to each other via a refrigerant pipe 38, and the heat storage heat exchanger 34 and the refrigerant pipe 24 are connected to each other via a refrigerant pipe 40. A heat storage two-way valve (for example, a solenoid valve) 42 is provided on the refrigerant pipe 38.

The indoor unit 4 accommodates, in addition to the indoor heat exchanger 16, a fan (not shown), vertical wind direction changing blades (not shown), and horizontal wind direction changing blades (not shown). The indoor heat exchanger 16 exchanges heat between indoor air sucked into the indoor unit 4 by the fan and a refrigerant flowing through the indoor heat exchanger 16 so that air heated or cooled by the heat exchange may be blown into a room during heating or cooling, respectively. As occasion demands, the vertical wind direction changing blades vertically change the wind direction from the indoor unit 4, and the horizontal wind direction changing blades horizontally change the wind direction from the indoor unit 4.

The outdoor heat exchanger 14 is provided with an outdoor heat exchanger inlet temperature sensor 44 for detecting the refrigerant temperature at an inlet thereof and an outdoor heat exchanger outlet temperature sensor 46 for detecting the refrigerant temperature at an outlet thereof during heating. The indoor heat exchanger 16 is provided with an indoor heat exchanger temperature sensor 48 for detecting the temperature thereof. Also, the heat storage tank 32 is provided with a heat storage tank temperature sensor 50 for detecting the temperature thereof, and the outdoor unit 2 is provided with an outdoor air temperature sensor 52 for detecting the temperature of outdoor air.

The compressor 6, the fan, the vertical wind direction changing blades, the horizontal wind direction changing blades, the four-way valve 8, the expansion valve 12, the defrosting two-way valve 30, the heat storage two-way valve 42, the outdoor heat exchanger inlet temperature sensor 44, the outdoor heat exchanger outlet temperature sensor 46, the indoor heat exchanger temperature sensor 48, the heat storage tank temperature sensor 50, the outdoor air temperature sensor 52, and the like are electrically connected to a controller 54 (for example, a microcomputer). Operations of the compressor 6, the fan, the vertical wind direction changing blades, the horizontal wind direction changing blades, the four-way valve 8, and the expansion valve 12 are controlled based on control signals from the controller 54, and opening and closing of the defrosting two-way valve 30 and that of the heat storage two-way valve 42 are also controlled based on control signals from the controller 54.

A relation of connection and functioning of the component parts of the above-described refrigerating cycle are explained hereinafter with a flow of the refrigerant, taking the case of the heating operation.

A refrigerant discharged from a discharge port in the compressor 6 passes through the four-way valve 8 and reaches the indoor heat exchanger 16 via the refrigerant pipe 18. The refrigerant condenses in the indoor heat exchanger 16 upon heat exchange with indoor air, leaves the indoor heat exchanger 16, and passes through the refrigerant pipe 20 and through the strainer 10, which prevents invasion of foreign substances into the expansion valve 12, before the refrigerant reaches the expansion valve 12. The refrigerant is reduced in pressure by the expansion valve 12 and reaches the outdoor heat exchanger 14 via the refrigerant pipe 22. The refrigerant then evaporates in the outdoor heat exchanger 14 upon heat exchange with outdoor air and passes through the refrigerant pipe 24, the four-way valve 8, and the accumulator 26, before the refrigerant returns to a suction port in the compressor 6.

The refrigerant pipe 28 branched from the refrigerant pipe 18 between the discharge port in the compressor 6 and the four-way valve 8 joins the refrigerant pipe 22 between the expansion valve 12 and the outdoor heat exchanger 14 via the defrosting two-way valve 30.

Furthermore, the heat storage tank 32 accommodating the heat storage material 36 and the heat storage heat exchanger 34 therein is disposed so as to encircle and contact the compressor 6 to store heat generated by the compressor 6 in the heat storage material 36. The refrigerant pipe 38 branched from the refrigerant pipe 20 between the indoor heat exchanger 16 and the strainer 10 reaches an inlet of the heat storage heat exchanger 34 via the heat storage two-way valve 42, and the refrigerant pipe 40 extending from an outlet of the heat storage heat exchanger 34 joins the refrigerant pipe 24 between the four-way valve 8 and the accumulator 26.

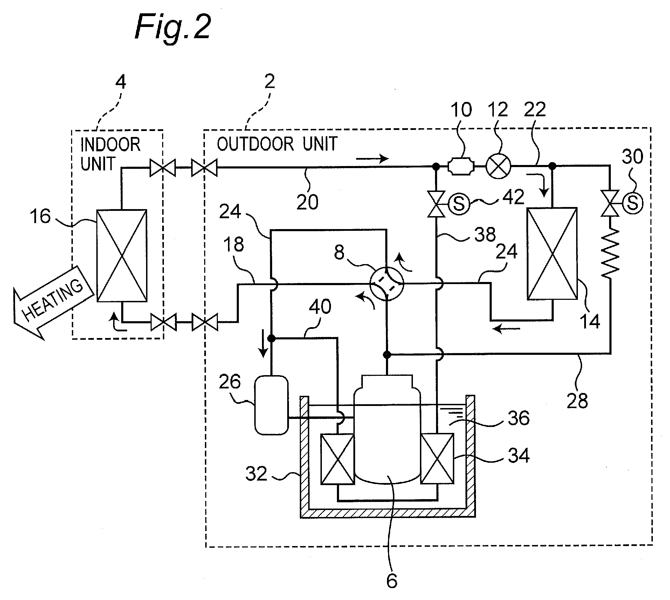

An operation of the air conditioner during normal heating is explained hereinafter with reference to Fig. 2 schematically depicting the operation of the air conditioner of Fig. 1 and a flow of the refrigerant during normal heating.

During normal heating, the defrosting two-way valve 30 and the heat storage two-way valve 42 are both closed. In this case, as described above, the refrigerant discharged from the discharge port in the compressor 6 passes through the four-way valve 8 and reaches the indoor heat exchanger 16 via the refrigerant pipe 18. Having condensed in the indoor heat exchanger 16 upon heat exchange with indoor air, the refrigerant leaves the indoor heat exchanger 16, passes through the refrigerant pipe 20, and reaches the expansion valve 12. The refrigerant is then reduced in pressure by the expansion valve 12 and reaches the outdoor heat exchanger 14 via the refrigerant pipe 22. Having evaporated in the outdoor heat exchanger 14 upon heat exchange with outdoor air, the refrigerant passes through the refrigerant pipe 24 and through the four-way valve 8, and returns to the suction port in the compressor 6.

Heat generated by the compressor 6 is transferred from an outer wall of the compressor 6 to an outer wall of the heat storage tank 32 and stored in the heat storage material 36 accommodated in the heat storage tank 32.

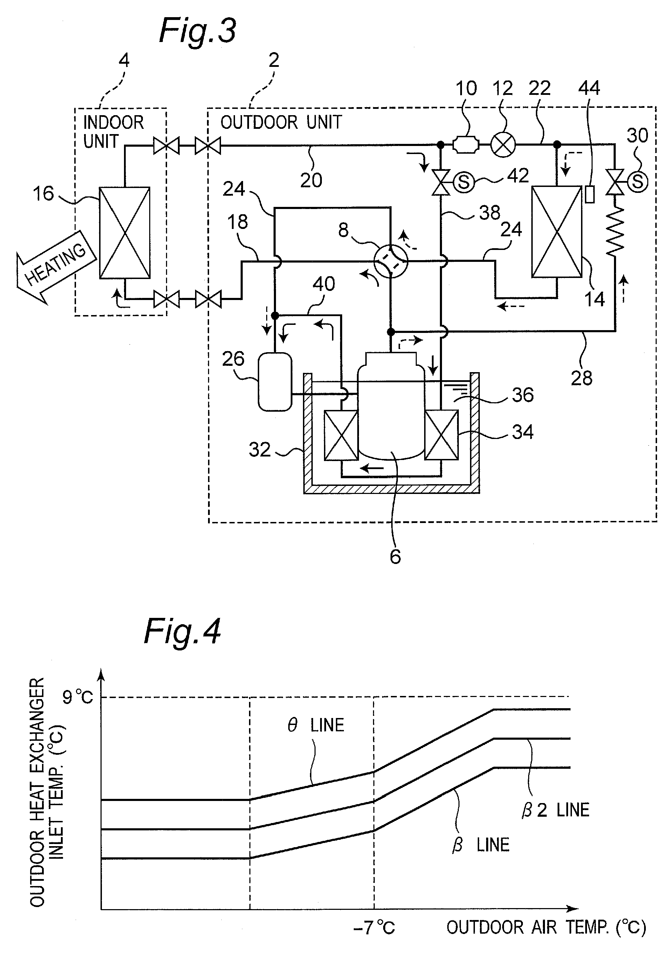

An operation of the air conditioner during defrosting/heating is next explained with reference to Fig. 3 schematically depicting the operation of the air conditioner of Fig. 1 and a flow of the refrigerant during defrosting/heating. In Fig. 3, solid arrows indicate a flow of refrigerant used for heating, and dotted arrows indicate a flow of refrigerant used for defrosting

If frost is formed and grows on the outdoor heat exchanger 14 during the above-discussed normal heating, the resistance of the outdoor heat exchanger to wind increases to thereby reduce the amount of air passing therethrough, thus resulting in a reduction of the evaporating temperature in the outdoor heat exchanger 14. As shown in Fig. 1, the air conditioner employed as a refrigerating cycle according to the present invention is provided with an outdoor heat exchanger inlet temperature sensor 44 for detecting the refrigerant temperature at an inlet of the outdoor heat exchanger 14 during heating, and if this temperature sensor 44 detects a reduced evaporating temperature compared with an evaporating temperature when no frost has been formed, the controller 54 outputs a command to shift the air conditioner from the normal heating operation to the defrosting/heating operation.

When the air conditioner is shifted from the normal heating condition to the defrosting/heating operation, the controller 54 controls the defrosting two-way valve 30 and the heat storage two-way valve 42 to open them. In this case, in addition to the flow of refrigerant during the normal heating operation as discussed above, part of a gaseous refrigerant discharged from the discharge port in the compressor 6 passes through the refrigerant pipe 28 and the defrosting two-way valve 30 and joins a refrigerant passing through the refrigerant pipe 22 to heat the outdoor heat exchanger 14. Having condensed and turned into a liquid phase, the refrigerant passes through the refrigerant pipe 24 and returns to the suction port in the compressor 6 via the four-way valve 8 and the accumulator 26.

It is to be noted that the refrigerant pipe 28 connecting the pipe between the expansion valve 12 and the outdoor heat exchanger 14 to the pipe between the discharge port in the compressor 6 and the four-way valve 8 can be referred to as "defrosting bypass circuit", because a gaseous refrigerant for heating the outdoor heat exchanger 14 for defrosting passes therethrough.

Also, part of a liquid refrigerant diverged from the refrigerant pipe 20 between the indoor heat exchanger 16 and the strainer 10 passes through the refrigerant pipe 38 and the heat storage two-way valve 42 and absorbs heat from the heat storage material 36 when passing through the heat storage heat exchanger 34. The liquid refrigerant then evaporates and turns into a gaseous phase. The resultant gaseous refrigerant passes through the refrigerant pipe 40, then joins a refrigerant passing through the refrigerant pipe 24, and finally returns to the suction port in the compressor 6 via the accumulator 26.

It is also to be noted that the refrigerant pipes 38, 40 connecting the pipe between the indoor heat exchanger 16 and the expansion valve 12 to the pipe between the suction port in the compressor 6 and the four-way valve 8 can be referred to as "heat storage bypass circuit", because a refrigerant passing through the heat storage heat exchanger 34 absorbs heat from the heat storage material 36.

Although the refrigerant returning to the accumulator 26 contains a liquid refrigerant returning from the outdoor heat exchanger 14, the latter is admixed with a high-temperature gaseous refrigerant returning from the heat storage heat exchanger 34 to thereby promote evaporation of the liquid refrigerant. Accordingly, it is not likely that a liquid refrigerant would pass through the accumulator 26 and return to the compressor 6, thus making it possible to enhance the reliability of the compressor 6.

When the outdoor heat exchanger 14 is heated by the gaseous refrigerant discharged from the discharge port in the compressor 6, and frost adhering to the outdoor heat exchanger 14 melts in the vicinity of zero degree, the temperature of the outdoor heat exchanger 14, which has dropped below the freezing point by adhesion of frost at the initiation of defrosting/heating, begins to increase upon termination of melting of the frost. When the outdoor heat exchanger outlet temperature sensor 46 detects such a temperature rise of the outdoor heat exchanger 14, a determination is made by the controller 54 that defrosting has been completed, and the controller 54 outputs a command to shift the defrosting/heating operation to the normal heating operation.

<Determination for defrosting and defrosting initiation conditions>

Fig. 4 depicts a defrosting initiation line (β-line) that has been set to the refrigerant temperature at the inlet of the outdoor heat exchanger 14, which temperature is detected by the outdoor heat exchanger inlet temperature sensor 44, and a heat storage material temperature rise-initiation line (θ-line) higher than the defrosting initiation line in the refrigerant temperature at the inlet of the outdoor heat exchanger 14, both based on the outdoor air temperature.

The defrosting initiation line indicates a threshold value to initiate the defrosting operation when the temperature detected by the outdoor heat exchanger inlet temperature sensor 44 is less than a defrosting initiation temperature (defrosting initiation line) at a given outdoor air temperature. On the other hand, the heat storage material temperature rise-initiation line is intended to predict initiation of the defrosting operation and determine whether a temperature rise control for the heat storage material 36 should be conducted when the temperature detected by the outdoor heat exchanger inlet temperature sensor 44 is less than a heat storage material temperature rise control-initiation temperature (heat storage material temperature rise-initiation line) at a given outdoor air temperature. That is, the heat storage material temperature rise-initiation line is used to determine whether or not an amount of heat necessary for the defrosting operation is stored in the heat storage tank 32, and if it is not stored, a control is conducted to increase the amount of heat stored in the heat storage tank 32 by increasing the temperature of the heat storage tank 32.

More specifically, when the temperature detected by the outdoor heat exchanger inlet temperature sensor 44 is less than the heat storage material temperature rise-initiation line, if the temperature detected by the heat storage tank temperature sensor 50 does not reach a predetermined temperature (for example, 30°C), the temperature of the heat storage tank 32 is increased by a predetermined temperature (for example, 2-3°C) by increasing the speed of the compressor 6 or by reducing the opening of the expansion valve 12 to increase the high-pressure side pressure. The predetermined temperature (30 °C in this embodiment) is a temperature calculated through experiments or the like and can be appropriately changed depending on the constitution of the refrigerating cycle or the like, but in this embodiment, if the heat storage tank 32 has a temperature of about 30°C, the amount of heat contained therein can melt about 700-800 grams of frost. In short, it is sufficient if the predetermined temperature is set to determine whether or not an amount of heat sufficient to melt a given amount of frost is stored in the heat storage tank 32.

Because an increase in speed of the compressor 6 is followed by an increase in input, it is preferred in terms of energy saving that the temperature of the heat storage tank 32 be increased by reducing the opening of the expansion valve 12, but the temperature of the heat storage tank 32 may be increased by increasing the speed of the compressor 6.

As described above, the heat storage material temperature rise-initiation temperature ($\theta$) is set based on the outdoor air temperature, but it depends on the defrosting initiation temperature ($\beta$) and is set, for example, as follows:

$$\beta < \theta \le \beta + 4.$$

In this way, the heating operation can be continued while the defrosting is being positively performed by determining whether or not a given amount of heat is stored in the heat storage tank 32 before the start of the defrosting operation.

<Defrosting/heating control>

Because the amount of heat stored in the heat storage material 36 is limited, this control is conducted to make effective use of the amount of heat stored in the heat storage material 36. That is, when the air conditioner is shifted from the normal heating operation to the defrosting/heating operation by controlling the defrosting two-way valve 30 and the heat storage two-way valve 42, the defrosting two-way valve 30 is first opened, and the heat storage two-way valve 42 is opened after a lapse of a predetermined period of time (for example, 10-20 seconds) from the time of opening of the defrosting two-way valve 30.

Although the defrosting/heating operation is conducted only after the defrosting two-way valve 30 and the heat storage two-way valve 42 have been both opened, if the heat storage two-way valve 42 is opened earlier than the defrosting two-way valve 30, the amount of heat stored in the heat storage material 36 is wasted, and if the defrosting two-way valve 30 and the heat storage two-way valve 42 are opened at the same time, a refrigerant from the outdoor heat exchanger 14 and a refrigerant from the indoor heat exchanger 16 are sucked into the compressor 6 at the same time, and a pressure fluctuation may occur. Accordingly, by setting an appropriate time lag between the time of opening of the defrosting two-way valve 30 and that of opening of the heat storage two-way valve 42, not only can the pressure fluctuation be minimized, but entry of a liquid refrigerant into the compressor 6 can be also avoided, thus making it possible to enhance the reliability of the compressor 6.

For this purpose, as shown in Fig. 1, the controller 54 is provided with a timer 56 for counting a period of time. When the air conditioner is shifted from the normal heating operation to the defrosting/heating operation, the timer 56 counts a lapse time from the time of opening of the defrosting two-way valve 30, and if the period of time counted by the timer 56 reaches a predetermined period of time, the heat storage two-way valve 42 is opened.

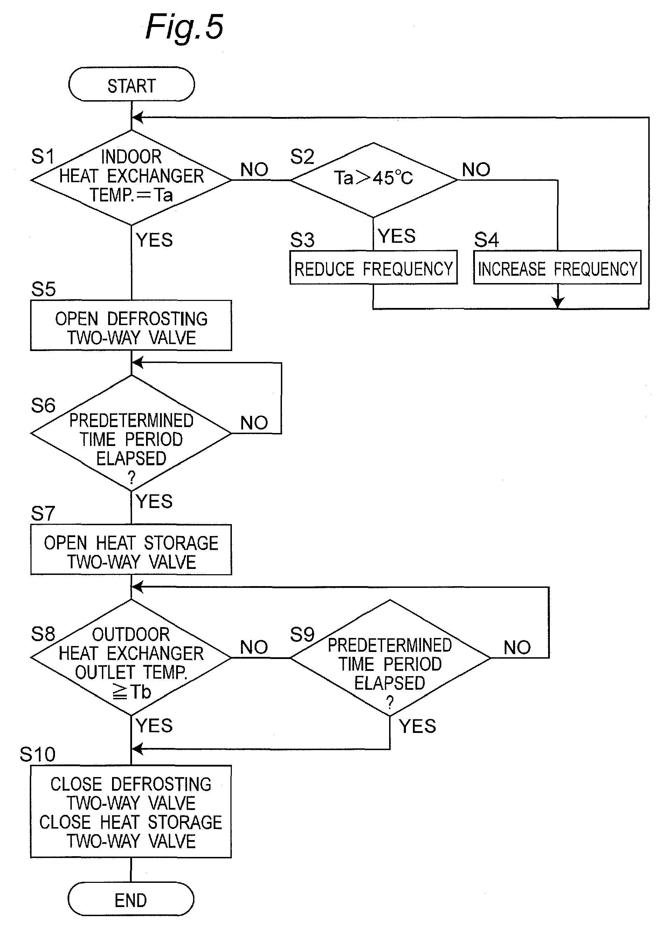

This control is explained in detail with reference to a flowchart of Fig. 5.

At step S1, a determination is made as to whether or not the temperature detected by the indoor heat exchanger temperature sensor 48 is equal to a predetermined temperature Ta (for example, 45°C). If the detected temperature is equal to the predetermined temperature Ta, the program advances to step S5, and if the detected temperature is not equal to the predetermined temperature Ta, the program advances to step S2, at which a determination is made whether the detected temperature exceeds the predetermined temperature Ta. If the detected temperature is greater than the predetermined temperature Ta, the operation frequency of the compressor 6 is reduced at step S3, and if the detected temperature is less than the predetermined temperature Ta, the operation frequency of the compressor 6 is increased at step S4. When the frequency control of the compressor 6 at step S3 or S4 is terminated, the program returns to step S1. Although the predetermined temperature Ta has been described as being 45°C, the former is not limited to the latter.

That is, the pressure fluctuation in a refrigerating cycle would occur by opening both the defrosting two-way valve 30 and the heat storage two-way valve 42 when the temperature of the indoor heat exchanger 16 is high, and there is a large pressure difference between the high pressure side and the low pressure side. Because it is likely that the pressure fluctuation may cause noise, if the temperature detected by the indoor heat exchanger temperature sensor 48 exceeds the predetermined temperature Ta, the operation frequency of the compressor 6 is reduced until the temperature detected by the indoor heat exchanger temperature sensor 48 becomes equal to the predetermined temperature Ta for reduction of the pressure of the high pressure side.

Also, in order to make, during the defrosting operation, effective use of the amount of heat contained in the refrigerant after the heat exchange in the indoor heat exchanger 16, if the temperature detected by the indoor heat exchanger temperature sensor 48 is less than the predetermined temperature Ta, the operation frequency of the compressor 6 is increased until the detected temperature becomes equal to the predetermined temperature Ta to thereby improve the efficiency of the defrosting operation after the heating operation.

If the temperature detected by the indoor heat exchanger temperature sensor 48 becomes equal to the predetermined temperature Ta at step S1, the normal heat storage defrosting operation is commenced while making effective use of heat stored in the heat storage tank 32. During this defrosting operation, the defrosting two-way valve 30 is opened at step S5 to introduce the refrigerant discharged from the compressor 6 into the outdoor heat exchanger 14, followed by step S6 at which a determination is made whether or not the period of time counted by the timer 56 after the time of opening of the defrosting two-way valve 30 reaches the predetermined period of time. If the period of time counted by the timer 56 reaches the predetermined period of time, the heat storage two-way valve 42 is opened at step S7 to introduce into the heat storage heat exchanger 34 the refrigerant that has passed through the indoor heat exchanger 16. If the predetermined period of time is not reached, the program returns to step S6.

When the heat storage two-way valve 42 is opened at step S7, the temperature detected by the outdoor heat exchanger outlet temperature sensor 46 is compared with a predetermined temperature Tb (for example, 6°C) indicative of termination of the defrosting operation at step S8. If the former is less than the latter, a determination is made that frost still remains or a base plate (an upper or lower plate of the outdoor heat exchanger 14) still freezes up. Accordingly, the defrosting operation is continued, and the program advances to step S9.

At step S9, if the period of time counted by the timer 56 from the time of opening of the defrosting two-way valve 30 does not reach a predetermined period of time (for example, 7 minutes), the program returns to step S8. If the temperature detected by the outdoor heat exchanger outlet temperature sensor 46 is greater than or equal to the predetermined temperature Tb, a determination is made that no frost remains and the base plate is unfrozen, and the defrosting two-way valve 30 and the heat storage two-way valve 42 are both closed at step S10 to thereby terminate the defrosting operation. The air conditioner is then shifted to the normal heating operation.

Also, at step S9, if the period of time counted by the timer 56 reaches the predetermined period of time, the program advances to step S10 irrespective of the temperature detected by the outdoor heat exchanger outlet temperature sensor 46. The period of time counted by the timer 56 is reset when the air conditioner is shifted to the normal heating operation.

The reason why the defrosting operation is forcibly terminated when the period of time counted by the timer 56 reaches the predetermined period of time at step S9 is that the amount of heat in the heat storage tank 32 is limited, and the heat storage tank 32 is designed to store an amount of heat that would be consumed for the predetermined period of time. Accordingly, even if the defrosting operation is continued over the predetermined period of time, no heat remains in the heat storage tank 32 and, hence, further defrosting has no effect.

In this embodiment, the temperature detected by the outdoor heat exchanger inlet temperature sensor 44 is always compared with the outdoor air temperature from the start to the end of the defrosting operation, and if the outdoor air temperature is higher than the outdoor heat exchanger inlet temperature, operation of an outdoor fan (not shown), provided in the outdoor unit 2 to convey air to the outdoor heat exchanger 14, is continued. By so controlling, heat contained in outdoor air is effectively utilized to thereby promote defrosting of the outdoor heat exchanger 14.

However, once a determination has been made during the defrosting operation that the outdoor heat exchanger inlet temperature is higher than the outdoor air temperature, the outdoor fan is not operated until the defrosting operation is terminated because the operation of the outdoor fan merely increases the outdoor heat exchanger inlet temperature.

<Heating flow after defrosting operation>

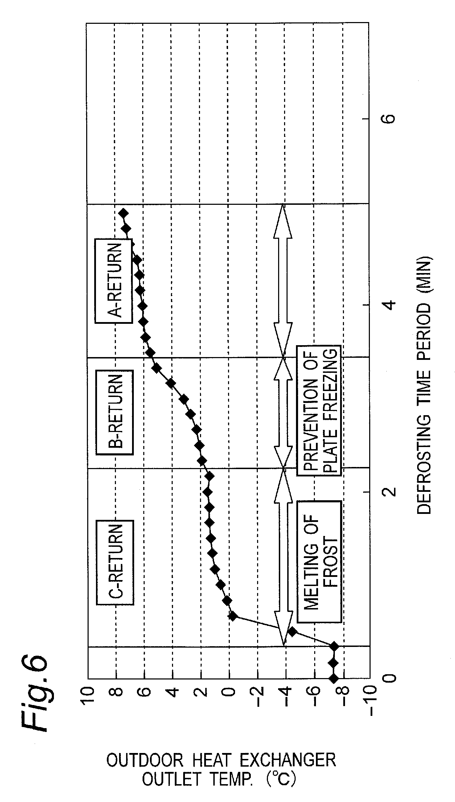

Fig. 6 is a graph indicating a change in refrigerant temperature at the outlet of the outdoor heat exchanger 14 after initiation of the defrosting operation.

As shown in Fig. 6, the refrigerant outlet temperature of the outdoor heat exchanger 14 is below the freezing point (for example, -10°C) at the time of initiation of the defrosting operation, but immediately after the defrosting operation has been commenced, the refrigerant outlet temperature of the outdoor heat exchanger 14 rises abruptly. Thereafter, the refrigerant outlet temperature of the outdoor heat exchanger 14 gradually rises within a predetermined temperature range (for example, 0-2°C) in which frost is melted, but the temperature rise tends to be stagnant. If the refrigerant outlet temperature of the outdoor heat exchanger 14 exceeds this temperature range, almost all frost is melted, but there is a good chance that the base plate of the outdoor heat exchanger 14 is still frozen. Accordingly, continuing defrosting operation increases the temperature of the outdoor heat exchanger 14 after the frost has melted. Because no frost remains at this time, the temperature rise is greater than that during melting of the frost. When the freezing of the base plate is mostly dissolved, the defrosting operation is conducted to preheat the outdoor heat exchanger 14 and, hence, the refrigerant outlet temperature thereof gradually increases.

In the practice of the present invention, the refrigerant outlet temperature of the outdoor heat exchanger 14 during the defrosting operation has two threshold values, and the subsequent form of the defrosting operation is changed depending on the refrigerant outlet temperature of the outdoor heat exchanger 14 when the air conditioner has been returned to the heating operation from the defrosting operation.

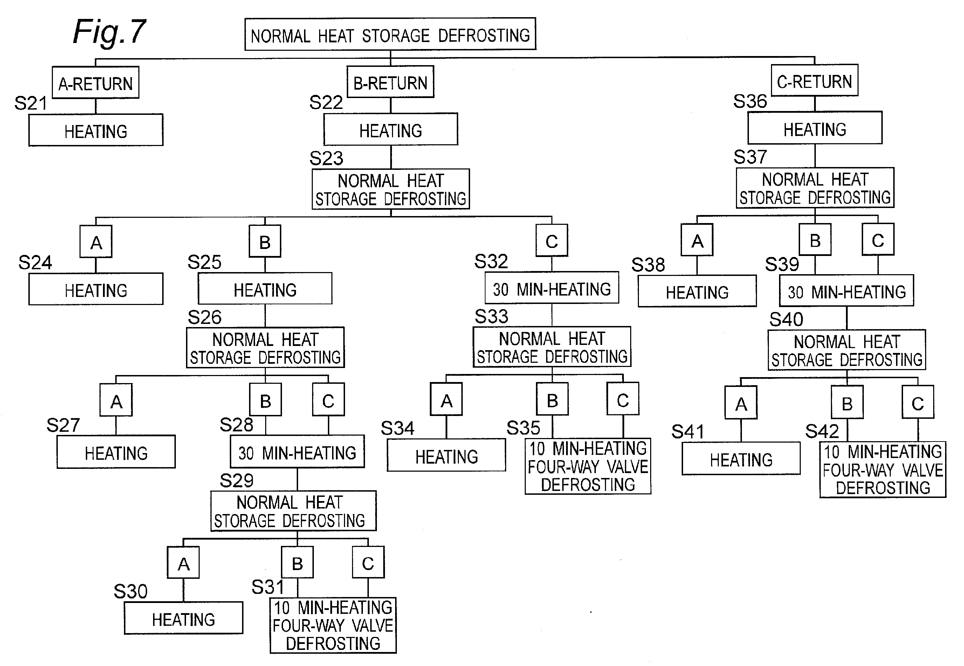

More specifically, there are provided a first threshold value (for example, 2°C) and a second threshold value (for example, 6°C) greater than the first threshold value, both set to the refrigerant outlet temperature of the outdoor heat exchanger 14 based on the graph of Fig. 6. The refrigerant outlet temperature of the outdoor heat exchanger 14 when the air conditioner has been returned to the heating operation from the defrosting operation is compared with the first and second threshold values, and a numerical value indicative of a comparison result is added to a memory (not shown) provided in the controller 54. As shown in Fig. 7, one of the heating operation, the heat storage defrosting operation, and the defrosting operation by switching of the four-way valve 8 from the heating operation to the cooling operation is selected based on the numerical value stored in the memory.

In this application, the term "defrosting operation" means the normal heat storage defrosting operation referred to above, and the defrosting operation by switching of the four-way valve 8 from the heating operation to the cooling operation is referred to as "four-way valve defrosting operation", and this defrosting operation is conducted under the condition in which the defrosting two-way valve 30 and the heat storage two-way valve 42 have been both closed.

Furthermore, a return to the heating operation from the defrosting operation is referred to as "A-return" when the refrigerant outlet temperature of the outdoor heat exchanger 14 is greater than or equal to the second threshold value, as "B-return" when the refrigerant outlet temperature is less than the second threshold value, but greater than or equal to the first threshold value, and as "C-return" when the refrigerant outlet temperature is less than the first threshold value.

More specifically, a value M integrated in the memory is reset (M=0) when the air conditioner is operated for the first time, and when the temperature detected by the indoor heat exchanger temperature sensor 48 becomes equal to the predetermined temperature Ta after completion of the normal heating operation, the normal heat storage defrosting operation is commenced, as described above. If the refrigerant outlet temperature of the outdoor heat exchanger 14 is greater than or equal to the second threshold value after completion of the defrosting operation, a determination is made that no frost remains and the base plate is unfrozen. In this case, the integrated value M in the memory is reset, and the heating operation is conducted (A-return).

After completion of the defrosting operation, if the refrigerant outlet temperature of the outdoor heat exchanger 14 is greater than or equal to the first threshold value, but less than the second threshold value, a determination is made that no frost remains, but the base plate still freezes up. In this case, a first predetermined value (for example, 1) is added to the memory, and the heating operation is conducted (B-return).

Also, after completion of the defrosting operation, if the refrigerant outlet temperature of the outdoor heat exchanger 14 is less than the first threshold value, a determination is made that frost remains. In this case, a second predetermined value (for example, 2) greater than the first predetermined value is added to the memory, and the heating operation is conducted (C-return).

In the case of A-return, after the heating operation has been conducted at step S21 in Fig. 7, the controls of Fig. 7 are terminated.

On the other hand, in the case of B-return or C-return, after completion of the heating operation, a subsequent control differs depending on the condition of the return from the defrosting operation to the heating operation, i.e., the integrated value M in the memory.

In the case of B-return, after the heating operation has been conducted at step S22, the defrosting operation is conducted at step S23, and in the case of A-return after B-return, the heating operation is conducted at step S24, and the integrated value M in the memory is reset (M:0→1). The control is thereafter terminated.

In the case of B-return after B-return (M=2), the heating operation is conducted at step S25, and the defrosting operation is subsequently conducted at step S26. The subsequent control differs depending on the condition of the return from the defrosting operation to the heating operation.

In the case of A-return after B-return has repeated twice, the heating operation is conducted at step S27, and the integrated value M in the memory is reset (M:2→0). The control is thereafter terminated.

On the other hand, in the case of B-return (M=3) or C-return (M=4), a determination is made that an amount of heat required for defrosting is not stored in the heat storage material 36. In this case, the heating operation is conducted for a first predetermined period of time at step S28, and the defrosting operation is subsequently conducted at step S29. The term "first predetermined period of time" refers to a period of time required for heat storage and is set to, for example, 30 minutes. The heating operation is conducted for the first predetermined period of time irrespective of the temperature detected by the outdoor heat exchanger inlet temperature sensor 44, which temperature provides an indication of determination of the presence or absence of frost. Thereafter, in the case of A-return, the heating operation is conducted at step S30, and the integrated value M in the memory is reset. The control is then terminated.

In the case of B-return or C-return, a determination is made that the normal heat storage defrosting operation cannot achieve complete defrosting. In this case, at step S31, the heating operation is conducted for a second predetermined period of time shorter than the first predetermined period of time, and the four-way valve defrosting operation is subsequently conducted to completely remove frost adhering to the outdoor heat exchanger 14. The term "second predetermined period of time" refers to a period of time for heating required for stabilizing the refrigerating cycle in consideration of, for example, the balance of a refrigerating machine oil in the refrigerating cycle. The second predetermined period of time is set to, for example, 10 minutes. After the four-way valve defrosting operation, the integrated value M in the memory is reset.

In the case of C-return after the defrosting operation at step S23, controls similar to those at steps S28, S29, S30, and S31 are conducted at steps S32, S33, S34, and S35.

Of the controls of Fig. 7, steps S36, S37, S38, S39, S40, S41, and S42 in a right-side flow (flow after C-return) are respectively the same as steps S25, S26, S27, S28, S29, S30, and S31 referred to above and, hence, duplicative explanation thereof is omitted.

The controls of Fig. 7 are summarized as follows.

- In the case where a return to the heating operation repeats at least twice without the temperature detected by the outdoor heat exchanger outlet temperature sensor 46 reaching a predetermined temperature, and the integrated value M in the memory is greater than or equal to a third threshold value (for example, 3), the heating operation is continued for a predetermined period of time irrespective of the temperature detected by the outdoor heat exchanger inlet temperature sensor 46 and subsequently shifted to the defrosting operation.

- In the case where a return to the heating operation repeats at least three times without the temperature detected by the outdoor heat exchanger outlet temperature sensor 46 reaching the predetermined temperature, and the integrated value M in the memory is greater than or equal to a fourth threshold value (for example, 4) greater than the third threshold value, the defrosting operation is conducted by switching the four-way valve 8 in a direction of the cooling operation under the condition in which the defrosting two-way valve 30 and the heat storage two-way valve 42 have been both closed.

Although in the graph of Fig. 6 there are provided two threshold values in the refrigerant outlet temperature of the outdoor heat exchanger 14 during defrosting, the controls of Fig. 7 can be conducted using only one threshold value (only the first threshold value) without providing the second threshold value.

In this case, A-return and B-return as shown in Fig. 6 are brought into one (A-return), and it is sufficient if only a left-side flow (flow after A-return) and a right-side flow (flow after C-return with B-returns in this flow omitted) as shown in Fig. 7 are conducted.

In this embodiment, the second threshold value is set to be equal to the predetermined temperature Tb referred to above, and if the defrosting operation is terminated when the temperature detected by the outdoor heat exchanger outlet temperature sensor 46 exceeds the predetermined temperature Tb, a return from the defrosting operation becomes an A-return at all times. However, the second threshold value is not limited to the predetermined temperature Tb and may be set to any other suitable temperature different therefrom as long as complete melting of frost can be detected.

<Change of defrosting initiation conditions>

Repetition of B-return or C-return is caused by a shortage of the amount of heat stored in the heat storage material 36 in the heat storage tank 32 when a large amount of frost has been formed on the outdoor heat exchanger 14. In view of this, in the practice of the present invention, another defrosting initiation line (β2-line) higher than the defrosting initiation line (β-line) by a predetermined temperature (for example, 2°C) is set as shown in Fig. 4.

The temperature β2 is higher than the defrosting initiation temperature (β) and variably set, for example, as follows based on the condition of frost formed on the outdoor heat exchanger 14 when the air conditioner has returned to the heating operation from the defrosting operation and also on the period of time for defrosting:

$$\beta+1 \leq \beta2 \leq \beta+5 \text{ (initial value: } \beta2=\beta+2).$$

That is, when the air conditioner has returned to the heating operation from the defrosting operation, if the temperature detected by the outdoor heat exchanger outlet temperature sensor 46 does not reach the predetermined temperature Tb (B- or C-return), the defrosting operation is initiated early by increasing the defrosting initiation temperature by the predetermined temperature, thereby minimizing the amount of frost on the outdoor heat exchanger 14.

The increase of the defrosting initiation line is repeatedly conducted. In the case of B- or C-return, the defrosting initiation temperature is increased by a predetermined temperature, and if B- or C-return is followed by another B- or C-return, the defrosting initiation temperature is again increased by the predetermined temperature. The increase of the defrosting initiation line is reset by A-return ($\beta2 \rightarrow \beta$).

However, once the β2 line has been set as the defrosting initiation temperature, the β2 line is detected soon after the air conditioner has returned from the defrosting operation, compared with the case where the defrosting initiation temperature has been set to the β line. This means that there is a possibility that the defrosting operation is initiated early, even though only an insufficient amount of heat is stored in the heat storage material 36.

In the practice of the present invention, not only the β2 line is set as the defrosting initiation temperature, but a minimum heating period of time Tx is also provided. In the case of B- or C-return from the defrosting operation, the heating operation is conducted for the minimum heating period of time Tx, thereby making it possible to minimize the defrosting operation under the condition in which only an insufficient amount of heat or no heat is stored in the heat storage material 36.

That is, in the case of B- or C-return from the defrosting operation, even if the temperature detected by the outdoor heat exchanger inlet temperature sensor 44 is less than the defrosting initiation temperature set to the β2 line, no defrosting operation is conducted if the heating period of time does not reach the minimum heating period of time Tx.

The minimum heating period of time Tx can be variably set to, for example, 30 minutes to 2 hours depending on an indoor load. It is preferred that such period of time be set long if the indoor load is low, and short if the indoor load is high. The reason for this is that if the indoor load is low, a determination can be made that the rate of frost formation is slow, and the heating operation can be continued as long as possible, while if the indoor load is high, a determination can be made that the rate of frost formation is high, and the defrosting operation can be initiated as early as possible.

This concept of the β2 line is explained with reference to Fig. 7. As described above, in this embodiment, the defrosting operation is initiated when frost formation is detected during the normal heating operation, and the defrosting operation is shifted to the normal heating operation based on the temperature detected by the outdoor heat exchanger outlet temperature sensor 46.

However, because the heating operation conducted in parallel with the defrosting operation is limited by the amount of heat in the heat storage material 36, the heating operation cannot be continued if heat in the heat storage material 36 has been used up.

Accordingly, if the temperature detected by the outdoor heat exchanger outlet temperature sensor 46 exceeds the predetermined temperature Tb, the air conditioner returns to the heating operation upon termination of the defrosting operation, but if the detected temperature does not exceed the predetermined temperature Tb within a predetermined period of time, the air conditioner is returned to the heating operation by forcibly releasing the defrosting operation. The reason for this is that no heat remains in the heat storage material 36 after a lapse of the predetermined period of time and, hence, the heating operation cannot be conducted while continuing the defrosting operation.

By way of example, step S21 shown in Fig. 7 indicates A-return, in which the temperature detected by the outdoor heat exchanger outlet temperature sensor 46 exceeds the predetermined temperature Tb before the defrosting operation is terminated. Accordingly, the defrosting initiation temperature for the next defrosting operation is determined by the β line.

On the other hand, step S22 or S36 indicates B- or C-return, in which the temperature detected by the outdoor heat exchanger outlet temperature sensor 46 does not exceed the predetermined temperature Tb (second threshold value) before the defrosting operation is terminated. Accordingly, the defrosting initiation temperature for the next defrosting operation is determined by the β2 line (for example, β+2°C) higher than the β line, thereby allowing the next defrosting operation to be conducted earlier than the normal defrosting operation.

At step S23 or S37, however, because the air conditioner returns to the heating operation without the temperature detected by the outdoor heat exchanger outlet temperature sensor 46 reaching the predetermined temperature Tb (second threshold value), there is a high possibility that frost may still remain. Accordingly, before a sufficient amount of heat is stored in the heat storage material 36, the temperature detected by the outdoor heat exchanger inlet temperature sensor 44 may reach the defrosting initiation temperature determined by the β2 line, thus allowing the defrosting operation to be conducted early.

In this case, even if the defrosting operation is conducted, frost cannot be removed while continuing the heating operation because a sufficient amount of heat is not stored in the heat storage material 36.

In view of this, in this embodiment, the heating operation is continued for at least the minimum heating period of time Tx for the purpose of storing a sufficient amount of heat in the heat storage material 36. By so doing, in the next defrosting operation, frost can be positively removed while continuing the heating operation.

If the air conditioner returns to the heating operation in B- or C-return after the defrosting operation has been conducted using the β2 line, the β2 line is raised toward a high temperature side (for example, β+3°C) to thereby allow the next or subsequent defrosting operation to be conducted earlier.

Although in this embodiment the initial value of the β2 line is set to β+2°C, the former is not limited to the latter and may be, for example, β+1°C. That is, if the β2 line is higher than the β line, the controls as described in this embodiment are satisfied.

<Protection control of heat storage material>

Referring again to Fig. 2 indicating the normal heating operation, in which no defrosting operation is conducted, the compressor 6 is operated with the defrosting two-way valve 30 and the heat storage two-way valve 42 closed, and heat generated by the compressor 6 is stored in the heat storage material 36 to gradually increase the temperature of the heat storage material 36.

If the temperature of the heat storage material 36 is excessively high, the heat storage material 36 may be deteriorated due to transformation (for example, oxidation) or boiling thereof. Accordingly, in the practice of the present invention, a protection control of the heat storage material 36 is performed by the controller 54 based on the temperature of the compressor 6, the temperature of the refrigerant discharged from the compressor 6, or the temperature of the heat storage tank 32 to avoid deterioration of the heat storage material 36. The reason for this is as follows.

- Compressor temperature: The temperature of the compressor 6 has a close relation to that of the heat storage material 36, and the latter increases with an increase of the former.
- Discharged refrigerant temperature: The temperature of the refrigerant discharged from the compressor 6 has a close relation to that of the heat storage material 36, and the latter increases with an increase of the former.
- Heat storage tank temperature: The temperature of the heat storage tank 32 has a close relation to that of the heat storage material 36, and the latter increases with an increase of the former.

As in the heating operation, the protection control of the heat storage material 36 is also performed in the cooling operation.

(i) Control based on compressor temperature

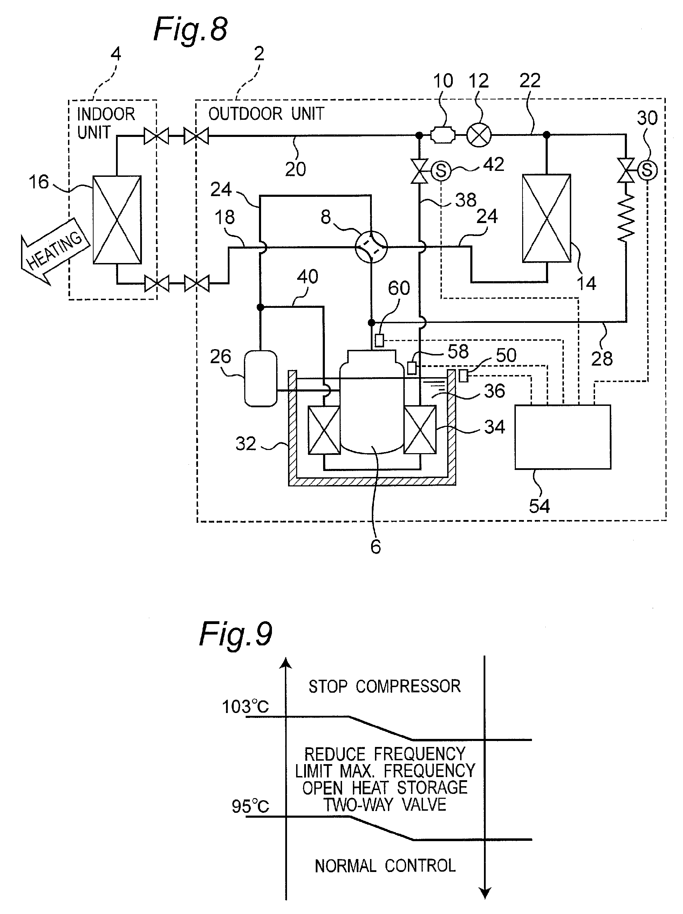

As shown in Fig. 8, a compressor temperature sensor 58 for detecting the temperature of the compressor 6 is provided. In this control, if the temperature detected by the compressor temperature sensor 58 exceeds a first predetermined temperature, the heat storage two-way valve 42 is opened to introduce a refrigerant having a reduced temperature, which has passed through the indoor heat exchanger 16 during heating or through the outdoor heat exchanger 14 during cooling, to the heat storage heat exchanger 34 for reduction of the temperature of the heat storage material 36.

More specifically, as shown in Fig. 9, if the temperature detected by the compressor temperature sensor 58 exceeds a first predetermined temperature (for example, 95°C), the heat storage two-way valve 42 is opened, and the maximum operation frequency of the compressor 6 is limited. An excessive temperature rise of the heat storage material 36 can be prevented by opening the heat storage two-way valve 42. In particular, because the heat storage material 36 is located around the compressor 6, local boiling of the heat storage material 36 held in contact with the compressor 6 is prevented, thereby making it possible to minimize evaporation of the heat storage material 36.

Thereafter, if the temperature detected by the compressor temperature sensor 58 exceeds a second predetermined temperature (for example, 103°C) higher than the first predetermined temperature, the compressor 6 is stopped.

Also, if the temperature detected by the compressor temperature sensor 58 exceeds the first predetermined temperature (for example, 95°C), a control for reducing the operation frequency of the compressor 6 can be performed instead of opening the heat storage two-way valve 42, or alternatively the control for reducing the operation frequency of the compressor 6 can be performed simultaneously with the control for opening the heat storage two-way valve 42. That is, a reduction in operation frequency of the compressor 6 is followed by a reduction in temperature of the compressor 6, which in turn prevents local boiling of the heat storage material 36 located in the vicinity of the compressor 6.

After the temperature detected by the compressor temperature sensor 58 has exceeded the second predetermined temperature, the temperature detected by the compressor temperature sensor 58 gradually reduces by stopping the compressor 6. If the temperature detected by the compressor temperature sensor 58 becomes less than a third predetermined temperature that is lower than the second predetermined temperature by a certain temperature (for example, 5°C), operation of the compressor 6 is resumed, but the heat storage two-way valve 42 remains opened. Accordingly, the temperature detected by the compressor temperature sensor 58 further reduces, and if the detected temperature becomes less than a fourth predetermined temperature that is lower than the first predetermined temperature by a certain temperature (for example, 5°C), the heat storage two-way valve 42 is closed.

The reason why the third and fourth predetermined temperatures set in a direction of temperature reduction are respectively lower than the second and first predetermined temperatures set in a direction of temperature rise is to avoid frequent repetition (hunting) of switching operations of the heat storage two-way valve 42 or ON/OFF operations of the compressor 6.

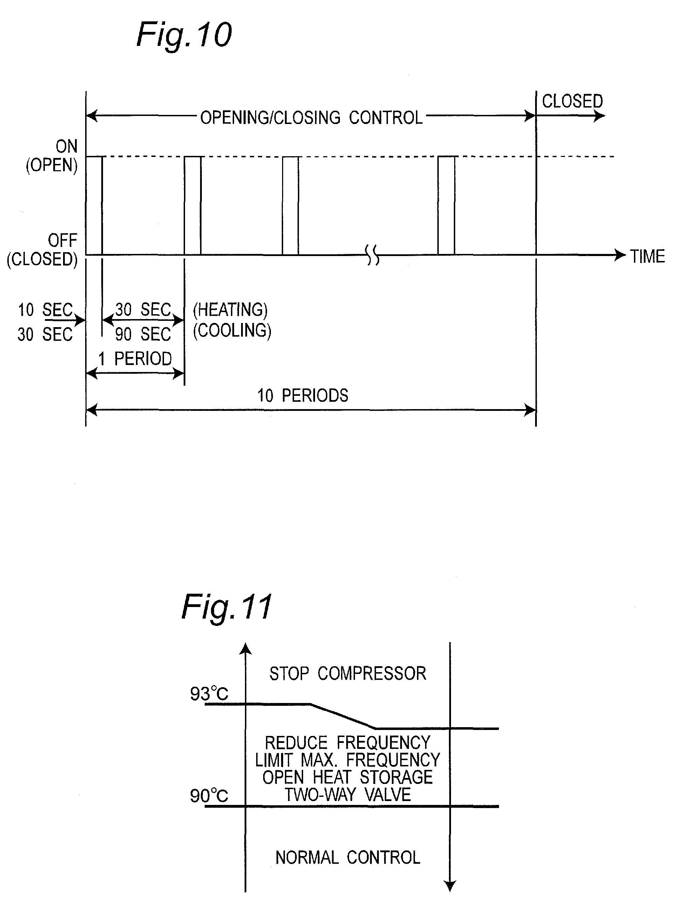

A switching control as shown in Fig. 10, in which the heat storage two-way valve 42 periodically repeats an open state and a closed state, is more preferable than the aforementioned control for opening the heat storage two-way valve 42. In the former switching control, during heating, an open state for, for example, 10 seconds and a closed state for, for example, 30 seconds repeat at a maximum of ten times, while during cooling, an open state for, for example, 30 seconds and a closed state for, for example, 90 seconds repeat at a maximum of ten times.

The control for opening and closing the heat storage two-way valve 42 in the above-described manner is performed in view of a problem of the follow-up capability such that even if the heat storage two-way valve 42 is opened, the temperature of the heat storage material 36 does not reduce immediately, and after a certain time delay, it gradually reduces.

Also, the reason why the period of time of the open state and that of the closed state of the heat storage two-way valve 42 during heating are respectively set shorter than the period of time of the open state and that of the closed state of the heat storage two-way valve 42 during cooling is that a liquid refrigerant having passed through the indoor heat exchanger 16 passes through the heat storage two-way valve 42 during heating, while a two-phase (gaseous phase and liquid phase) refrigerant having passed through the outdoor heat exchanger 14 passes through the heat storage two-way valve 42 during cooling, and the liquid refrigerant has a higher density than the two-phase refrigerant and, hence, the former has a larger amount of refrigerant than the latter.

Moreover, the opening and closing of the heat storage two-way valve 42 is limited to a maximum of ten times in view of the durability of the heat storage two-way valve 42.

(ii) Control based on discharged refrigerant temperature

As shown in Fig. 8, a compressor discharge temperature sensor 60 for detecting the temperature of the refrigerant discharged from the compressor 6 is provided, and a control as shown in Fig. 11 is performed based on the temperature detected by the compressor discharge temperature sensor 60. Because the control of Fig. 11 is similar to that of Fig. 9, only differences therebetween are explained hereinafter.

- First predetermined temperature: for example, 90°C
- Second predetermined temperature: for example, 93°C
- Third predetermined temperature: temperature lower than the second predetermined temperature
- Fourth predetermined temperature: temperature equal to the first predetermined temperature

Because it is highly unlikely that the control based on the discharged refrigerant temperature is subject to hunting, the fourth predetermined temperature is made equal to the first predetermined temperature. However, it should be appreciated that the fourth predetermined temperature may differ from the first predetermined temperature.

The control based on the discharged refrigerant temperature is particularly effective when the refrigerant circulation volume is small, e.g., when the compressor 6 is not in operation for a long time. In such a state, a temperature rise of the compressor 6 is very slow, and it is accordingly likely that the temperature detected by the compressor temperature sensor 58 may greatly differ from the temperature of the heat storage material 36. It is therefore difficult to estimate the temperature of the heat storage material 36 based on the temperature detected by the compressor temperature sensor 58. In view of this, the protection control of the heat storage material 36 is performed upon detection of the discharged refrigerant temperature having a good follow-up capability, thereby making it possible to effectively reduce the temperature of the heat storage material 36 even when the compressor 6 is not in operation for a long time.

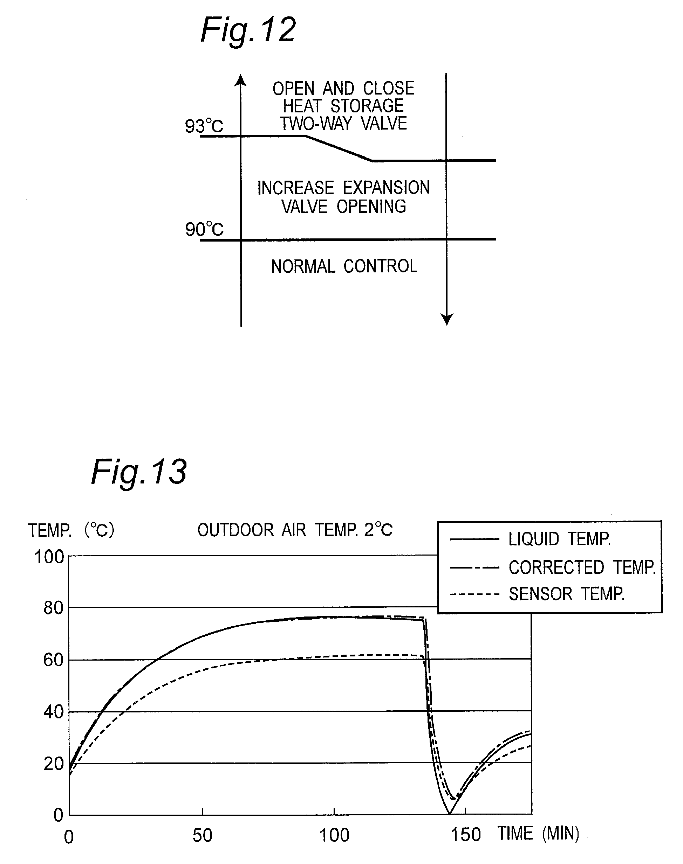

Fig. 12 depicts a modified form of Fig. 11. In the control based on the discharged refrigerant temperature as shown in Fig. 12, if the temperature detected by the compressor discharge temperature sensor 60 exceeds the first predetermined temperature, a control for increasing the opening of the expansion valve 12 (increment: for example, 30 pulses/minute) is performed, and if the temperature detected by the compressor discharge temperature sensor 60 subsequently exceeds the second predetermined temperature, a control for opening the heat storage two-way valve 42 or opening and closing it is performed.

After the temperature detected by the compressor discharge temperature sensor 60 has exceeded the second predetermined temperature, the temperature detected by the compressor discharge temperature sensor 60 is gradually reduced by opening the heat storage two-way valve 42 or opening and closing it, and if the detected temperature becomes less than the third predetermined temperature, the heat storage two-way valve 42 is closed. As a result, the temperature detected by the compressor discharge temperature sensor 60 further reduces, and if it becomes less than the fourth predetermined temperature, the opening of the expansion valve 12 is made constant before the normal control is performed.

(iii) Control based on heat storage tank temperature

This control is performed based on the temperature detected by the heat storage tank temperature sensor 50 in a manner substantially similar to the control of Fig. 9. Differences therebetween are as follows.

- First predetermined temperature: for example, 93°C
- Second predetermined temperature: for example, 95°C
- Third predetermined temperature: for example, 90°C
- Fourth predetermined temperature: for example, 88°C

In this control based on the heat storage tank temperature, because the temperature of the heat storage tank 32 itself is detected by the heat storage tank temperature sensor 50, if the temperature detected by the heat storage tank temperature sensor 50 exceeds the first predetermined temperature, only the control for opening the heat storage two-way valve 42 or opening and closing it is performed, and the control for reducing the operation frequency of the compressor 6 is not needed.

The control based on the heat storage tank temperature can positively prevent local boiling of the heat storage material 36 and boiling of the entire heat storage material 36.

In place of the heat storage tank temperature sensor 50 for detecting the temperature of the heat storage tank 32, a heat storage material temperature sensor for detecting the temperature of the heat storage material 36 in the heat storage tank 32 may be provided for a similar control based on the temperature detected thereby.

Although the protection control of the heat storage material 36 based on the compressor temperature, the discharged refrigerant temperature, or the heat storage tank temperature has been described above, the compressor temperature (CT), the discharged refrigerant temperature (DRT), and the heat storage tank temperature (HSTT) have a following relationship:

- Start-up or stabilized state: DRT>CT>HSTT
- Amount of refrigerant: minimum or clogging of refrigerating cycle: CT=

HSTT >DRT

In order to protect the heat storage material 36 irrespective of the state of the air conditioner, it is most preferable that the protective control of the heat storage material 36 be performed based on all of such temperatures.

<Temperature estimation of heat storage material>

Detection of the temperature of the heat storage material 36 is needed to detect the amount of heat in the heat storage material 36 accommodated in the heat storage tank 32, but if the heat storage material temperature sensor is located within the heat storage material 36, problems of corrosion, waterproof property, and the like should be considered.

Also, if the heat storage material temperature sensor is located within the heat storage material 36, and if the heat storage tank 32 is obliquely mounted on the compressor 6 at the point of production, or the outdoor unit 2 is obliquely installed, the heat storage material temperature sensor accommodated within the heat storage tank 32 may be exposed on the outside of the heat storage material 36, thus resulting in incorrect detection of the temperature of the heat storage material 36.

Accordingly, in the practice of the present invention, as shown in Fig. 8, the heat storage tank temperature sensor 50 is fitted on the outside of the heat storage tank 32, and the temperature detected by the heat storage tank temperature sensor 50 is corrected based on the temperature detected by the outdoor air temperature sensor 52 to estimate the temperature of the heat storage material 36. By so doing, the temperature of the heat storage material 36 can be assuredly obtained, and inferior quality can be avoided while enhancing the productivity.

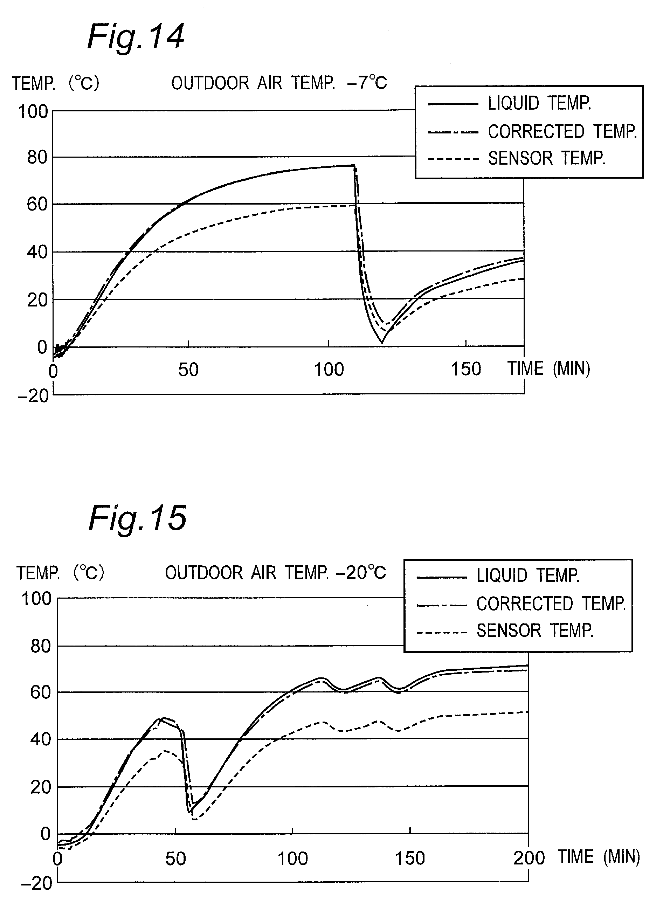

More specifically, Figs. 13 to 16 indicate an actual temperature (solid line) of the heat storage material 36 and the temperature (dotted line) detected by the heat storage tank temperature sensor 50 with respect to the outdoor air temperature. As shown in these figures, in most cases, the actual temperature of the heat storage material 36 and the temperature detected by the heat storage tank temperature sensor 50 differ from each other.

Based on such experimental results, the inventors of this application found out that a corrected value obtained using the following formula is substantially in agreement with the actual temperature of the heat storage material 36. The formula is obtained by correcting the temperature Tc detected by the heat storage tank temperature sensor 50 based on the temperature Tout detected by the outdoor air temperature sensor 52.

$$\text{Corrected temperature} = Tc + (Tc - Tout) \times \alpha \ (\alpha = 0.15)$$

The corrected temperature calculated using this formula is indicated by a chain line in the graphs of Figs. 13 to 16, and the corrected temperature indicated by the chain line and the actual temperature of the heat storage material 36 indicated by the solid line are substantially in agreement with each other. It is to be noted that a is not limited to the above-described value and can be changed to an appropriate value obtained, for example, through experiments in consideration of variations in accuracy of the heat storage tank temperature sensor.

Although the heat storage tank 32 is normally fully filled with the heat storage material 36, if the heat storage material 36 reduces due to cracking of the heat storage tank 32 or evaporation of the heat storage material 36, the rate of temperature reduction (temperature gradient) of the heat storage material 36 becomes small during defrosting. In view of this, an error decision is made based on the temperature Tc detected by the heat storage tank temperature sensor 50.

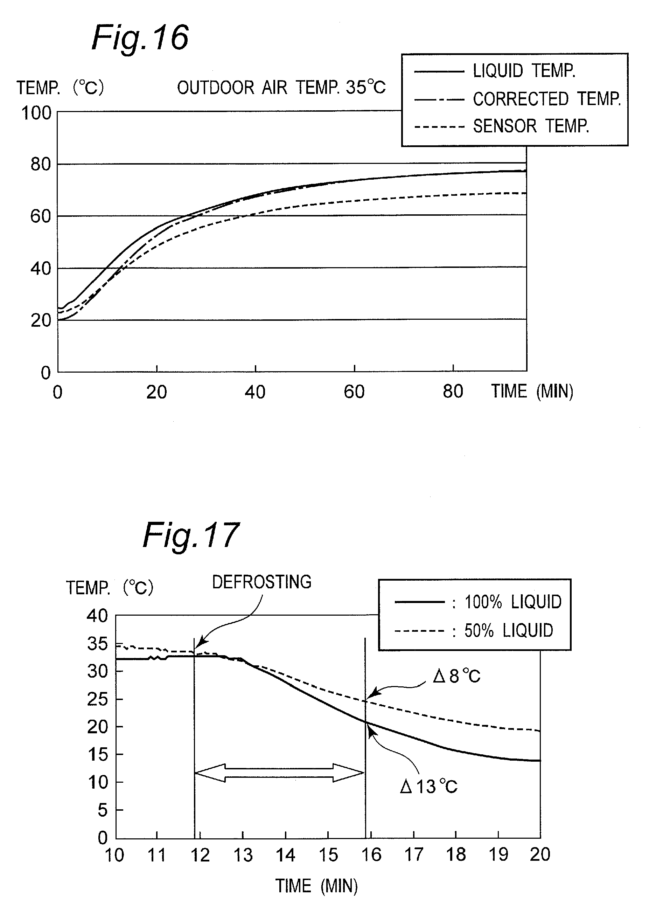

Fig. 17 indicates a change in temperature of the heat storage material 36 after a defrosting operation when the amount of the heat storage material 36 in the heat storage tank 32 is sufficient and insufficient, and particularly indicates a change in the temperature Tc detected by the heat storage tank temperature sensor 50 when the amount of the heat storage material 36 is 100% (solid line) and 50% (dotted line).

As can be seen from the graph of Fig. 17, the more the heat storage material 36 in the heat storage tank 32, the larger the rate of temperature reduction (temperature gradient) for a predetermined period of time after the start of the defrosting operation. In the present invention, if the rate of reduction for the predetermined period of time in the temperature Tc detected by the heat storage tank temperature sensor 50 is less than a predetermined rate, a decision is made that the heat storage tank 32 is short of the heat storage material 36.

Specifically, the rate of temperature reduction of the heat storage tank 32 for a predetermined period of time (for example, 3-4 minutes) after the heat storage two-way valve 42 has been opened is calculated, and if the calculated rate of temperature reduction is less than a predetermined value (for example, 2°C/minute), a warning is visually or aurally given to a person in a room. By way of example, the warning is in the form of flickering of a lamp provided on the indoor unit 4 or on a remote controller (not shown) for operation of the indoor unit 4, literal information, a warning tone, or the like.

The warning may be also given when a heat storage defrosting operation has been terminated after a lapse of a predetermined period of time (in the case of YES at step S9 in Fig. 5).

The temperature detected by the heat storage tank temperature sensor 50 is used as a reference for determination of shortage of the heat storage material 36, which takes the form of a lowered level of the heat storage material 36 in the heat storage tank 32. For this reason, it is preferred that the heat storage tank temperature sensor 50 be positioned above a vertical center of the heat storage tank 32.

Because the air conditioner according to the present invention can avoid deterioration or evaporation of the heat storage material that stores therein heat generated by the compressor, it is effectively applicable to other refrigerating machines designed to remove frost by making use of the heat stored in the heat storage material.

List of Reference Numerals

2 outdoor unit, 4 indoor unit, 6 compressor, 8 four-way valve, 10 strainer, 12 expansion valve, 14 outdoor heat exchanger, 16 indoor heat exchanger, 18, 20, 22, 24, 28, 38, 40 refrigerant pipe, 26 accumulator, 30 defrosting two-way valve, 32 heat storage tank, 34 heat storage heat exchanger, 36 heat storage material, 42 heat storage two-way valve, 44 outdoor heat exchanger inlet temperature sensor, 46 outdoor heat exchanger outlet temperature sensor, 48 indoor heat exchanger temperature sensor, 50 heat storage tank temperature sensor, 52 outdoor air temperature sensor, 54 controller, 56 timer, 58 compressor temperature sensor, 60 compressor discharge temperature sensor.

**Claims**

1. An air conditioner having a refrigerating cycle in which a refrigerant flows through a compressor, a four-way valve, an indoor heat exchanger, an expansion valve, an outdoor heat exchanger, and the four-way valve in this order during heating, the air conditioner also having a heat storage tank that accommodates a heat storage material for storing therein heat generated by the compressor and a heat storage heat exchanger,
   **characterized in that**
   a heat storage bypass circuit is provided to connect a refrigerant pipe between the indoor heat exchanger and the expansion valve and a refrigerant pipe between the four-way valve and an inlet port defined in the compressor,
   a defrosting bypass circuit is provided to connect a refrigerant pipe between the expansion valve and the outdoor heat exchanger and a refrigerant pipe between an outlet port defined in the compressor and the four-way valve,
   the heat storage heat exchanger and a heat storage two-way valve are provided in the heat storage bypass circuit,
   a defrosting two-way valve is provided in the defrosting bypass circuit, at least one of a compressor temperature sensor for detecting a temperature of the compressor, a compressor discharge temperature sensor for detecting a temperature of a refrigerant discharged from the compressor, and a heat storage tank temperature sensor for detecting a temperature of the heat storage tank is provided, and
   if the temperature detected by the compressor temperature sensor, the compressor discharge temperature sensor, or the heat storage tank temperature sensor exceeds a first predetermined temperature, the heat storage two-way valve is opened to introduce the refrigerant into the heat storage heat exchanger.

2. The air conditioner according to claim 1, wherein an operation frequency of the compressor is reduced instead of opening the heat storage two-way valve.

3. The air conditioner according to claim 1, wherein if the temperature detected by the compressor temperature sensor, the compressor discharge temperature sensor, or the heat storage tank temperature sensor exceeds the first predetermined temperature, an operation frequency of the compressor is reduced when the heat storage two-way valve is opened.

4. The air conditioner according to claim 1, wherein if the temperature detected by the compressor discharge temperature sensor exceeds the first predetermined temperature, an opening of the expansion valve is increased instead of opening the heat storage two-way valve.

5. The air conditioner according to claim 4, wherein if the temperature detected by the compressor discharge temperature sensor exceeds a second predetermined temperature greater than the first predetermined temperature, the heat storage two-way valve is opened.

6. The air conditioner according to any one of claims 1 to 5, wherein an opening and closing control of the heat storage two-way valve is conducted to periodically open and close the heat storage two-way valve.

7. The air conditioner according to claim 6, wherein a period of time of an open state is set shorter than that of a closed state in the opening and closing control of the heat storage two-way valve.

8. The air conditioner according to claim 6 or 7, wherein the period of time of the open state and that of the closed state during heating are respectively set shorter than the period of time of the open state and that of the closed state during cooling.

Fig.1

EP 2 428 752 A2

## Fig.2

## Fig.3

## Fig.4

# Fig.5

```
                    ┌─────────┐
                    │  START  │
                    └────┬────┘
                         │ ◄──────────────────────────────────┐
                         ▼                                     │
S1      ╱ INDOOR  ╲         S2    ╱         ╲    NO            │
       ╱ HEAT EXCHANGER ╲  NO    ╱ Ta>45℃  ╲ ───────────┐     │
       ╲  TEMP.=Ta      ╱ ───── ╲          ╱             │     │
        ╲             ╱          ╲        ╱              │     │
           │ YES                    │ YES               │     │
                         S3         ▼        S4         │     │
                    ┌──────────────────┐  ┌──────────────────┐│
                    │ REDUCE FREQUENCY │  │INCREASE FREQUENCY││
                    └────────┬─────────┘  └────────┬─────────┘│
S5                           │                     │          │
   │                         └────────┐            │          │
   ▼                                  └────────────┴──────────┘
┌──────────────────┐
│ OPEN DEFROSTING  │
│  TWO-WAY VALVE   │
└────────┬─────────┘
         │ ◄──────────────────────┐
         ▼                        │
S6   ╱             ╲              │
    ╱ PREDETERMINED ╲   NO        │
    ╲ TIME PERIOD   ╱ ────────────┘
     ╲ ELAPSED     ╱
      ╲    ?      ╱
         │ YES
S7       ▼
┌──────────────────┐
│ OPEN HEAT STORAGE│
│  TWO-WAY VALVE   │
└────────┬─────────┘
         │ ◄──────────────────────────────────────┐
         ▼                                         │
S8   ╱ OUTDOOR    ╲        S9  ╱             ╲     │
    ╱ HEAT EXCHANGER╲  NO     ╱ PREDETERMINED ╲ NO │
    ╲ OUTLET TEMP.  ╱ ─────── ╲ TIME PERIOD   ╱ ───┘
     ╲   ≧Tb       ╱           ╲ ELAPSED     ╱
        │ YES                   ╲    ?      ╱
S10     ▼ ◄──────────────────────── │ YES
┌──────────────────┐
│ CLOSE DEFROSTING │
│  TWO-WAY VALVE   │
│ CLOSE HEAT STORAGE│
│  TWO-WAY VALVE   │
└────────┬─────────┘
         ▼
    ┌─────────┐
    │   END   │
    └─────────┘
```

*Fig.6*

## Fig.7

```
                    ┌─────────────────────────────────┐
                    │ NORMAL HEAT STORAGE DEFROSTING  │
                    └─────────────────────────────────┘
         ┌──────────────────────┼──────────────────────────────────────────┐
    ┌──────────┐           ┌──────────┐                               ┌──────────┐
    │ A-RETURN │           │ B-RETURN │                               │ C-RETURN │
    └──────────┘           └──────────┘                               └──────────┘
S21    │                S22    │                                   S36    │
    ┌──────────┐           ┌──────────┐                               ┌──────────┐
    │ HEATING  │           │ HEATING  │                               │ HEATING  │
    └──────────┘           └──────────┘                               └──────────┘
                        S23    │                                   S37    │
                     ┌────────────────┐                            ┌────────────────┐
                     │  NORMAL HEAT   │                            │  NORMAL HEAT   │
                     │STORAGE DEFROSTING│                          │STORAGE DEFROSTING│
                     └────────────────┘                            └────────────────┘
```

NORMAL HEAT STORAGE DEFROSTING

A-RETURN — S21 — HEATING

B-RETURN — S22 — HEATING — S23 — NORMAL HEAT STORAGE DEFROSTING

- A — S24 — HEATING
- B — S25 — HEATING — S26 — NORMAL HEAT STORAGE DEFROSTING
  - A — S27 — HEATING
  - B — S28 — 30 MIN-HEATING — S29 — NORMAL HEAT STORAGE DEFROSTING
    - A — S30 — HEATING
    - B — S31 — 10 MIN-HEATING FOUR-WAY VALVE DEFROSTING
    - C
  - C
- C — S32 — 30 MIN-HEATING — S33 — NORMAL HEAT STORAGE DEFROSTING
  - A — S34 — HEATING
  - B — S35 — 10 MIN-HEATING FOUR-WAY VALVE DEFROSTING
  - C

C-RETURN — S36 — HEATING — S37 — NORMAL HEAT STORAGE DEFROSTING

- A — S38 — HEATING
- B — S39 — 30 MIN-HEATING — S40 — NORMAL HEAT STORAGE DEFROSTING
  - A — S41 — HEATING
  - B — S42 — 10 MIN-HEATING FOUR-WAY VALVE DEFROSTING
  - C
- C

EP 2 428 752 A2

## Fig.8

## Fig.9

STOP COMPRESSOR

103°C

REDUCE FREQUENCY
LIMIT MAX. FREQUENCY
OPEN HEAT STORAGE
TWO-WAY VALVE

95°C

NORMAL CONTROL

# Fig.10

# Fig.11

## Fig.12

OPEN AND CLOSE
HEAT STORAGE
93°C    TWO-WAY VALVE

INCREASE EXPANSION
VALVE OPENING

90°C

NORMAL CONTROL

## Fig.13

TEMP. (°C)        OUTDOOR AIR TEMP. 2°C

| | LIQUID TEMP. |
| --- | --- |
| | CORRECTED TEMP. |
| | SENSOR TEMP. |

100

80

60

40

20

0

0          50          100          150    TIME (MIN)

## Fig.14

TEMP. (°C)  OUTDOOR AIR TEMP. −7°C

Legend:
——— LIQUID TEMP.
—·— CORRECTED TEMP.
- - - - SENSOR TEMP.

## Fig.15

TEMP. (°C)  OUTDOOR AIR TEMP. −20°C

Legend:
——— LIQUID TEMP.
—·— CORRECTED TEMP.
- - - - SENSOR TEMP.

## Fig.16

TEMP. (°C)　　OUTDOOR AIR TEMP. 35°C

| | LIQUID TEMP. |
|---|---|
| —·— | CORRECTED TEMP. |
| ----- | SENSOR TEMP. |

100

80

60

40

20

0

0　　　20　　　40　　　60　　　80　　TIME (MIN)

## Fig.17

TEMP. (°C)　　DEFROSTING

| ——— | : 100% LIQUID |
|---|---|
| ----- | : 50% LIQUID |

40

35

30

25

20

15

10

5

0

10　11　12　13　14　15　16　17　18　19　20

TIME (MIN)

△8°C

△13°C

## Fig.18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 3031666 A